# EUROPEAN PATENT APPLICATION

(11) **EP 0 966 939 A2**
(43) Date of publication of application: **29.12.1999**
(21) Application number: 99304113.6
(22) Date of filing: 27.05.1999
(51) Int. Cl.: A61F 13/00

(54) **Wound dressing holder**

(30) Priority: 29.05.1998 US 87177 P
(71) Applicant: Dale Medical Products, Inc., Plainville, MA 02762 (US)
(72) Inventor: Kovacs, Joesph, Cranston, Rhode Island 02905 (US)
(74) Representative: Jenkins, Peter David

(57) **Abstract**

A wound dressing holding is provided in which slits in the holder create legs used to secure the holder. According to one preferred embodiment, a wound dressing holder is provided that includes a single piece of stretchable material, the piece including a first slit that creates first and second legs and a second slit that creates third and fourth legs. The holder further includes a first fastener attached to the first leg and a second fastener attached to the second leg, the first and second fasteners to be secured to a surface of the stretchable material to hold a wound dressing in place.

## Description

Wound dressings are typically held in place by bandages wrapped several times around the wound dressing, and the limb (or other body area) on which the wound occurs. Consequently, securing and changing the wound dressing is a time consuming task. Alternatively, the wound dressing is held in place by tape adhered to the wound dressing and the patient's skin. In this case, removing and changing the wound dressing can result in irritation of the patient's skin.

Accordingly, it is an object of the present invention to provide an improved wound dressing holder.

A wound dressing holding is provided in which slits in the holder create legs used to secure the holder. According to one preferred embodiment, a wound dressing holder is provided that includes a single piece of stretchable material, the piece including a first slit that creates first and second legs and a second slit that creates third and fourth legs. The holder further includes a first fastener attached to the first leg and a second fastener attached to the second leg, the first and second fasteners to be secured to a surface of the stretchable material to hold a wound dressing in place.

Embodiments of the present invention will now be described by way of example only, with reference to the accompanying drawings, in which:-
Fig. 1 is a perspective view of a wound dressing holder according to one preferred embodiment of the present invention;
Fig. 2 is a cross sectional view taken along line 2-2 of Fig. 1;
Fig. 3 is a top plan view of a wound dressing holder according to another preferred embodiment of the present invention;
Fig. 4 is a top plan view of a wound dressing holder according to another preferred embodiment of the present invention;
Figs. 5 and 6 show the wound dressing holder of Fig. 1 applied to a patient's knee and hip, respectively; and
Figs. 7 and 8 show the wound dressing holder of Fig. 1 applied to a patient's ankle.

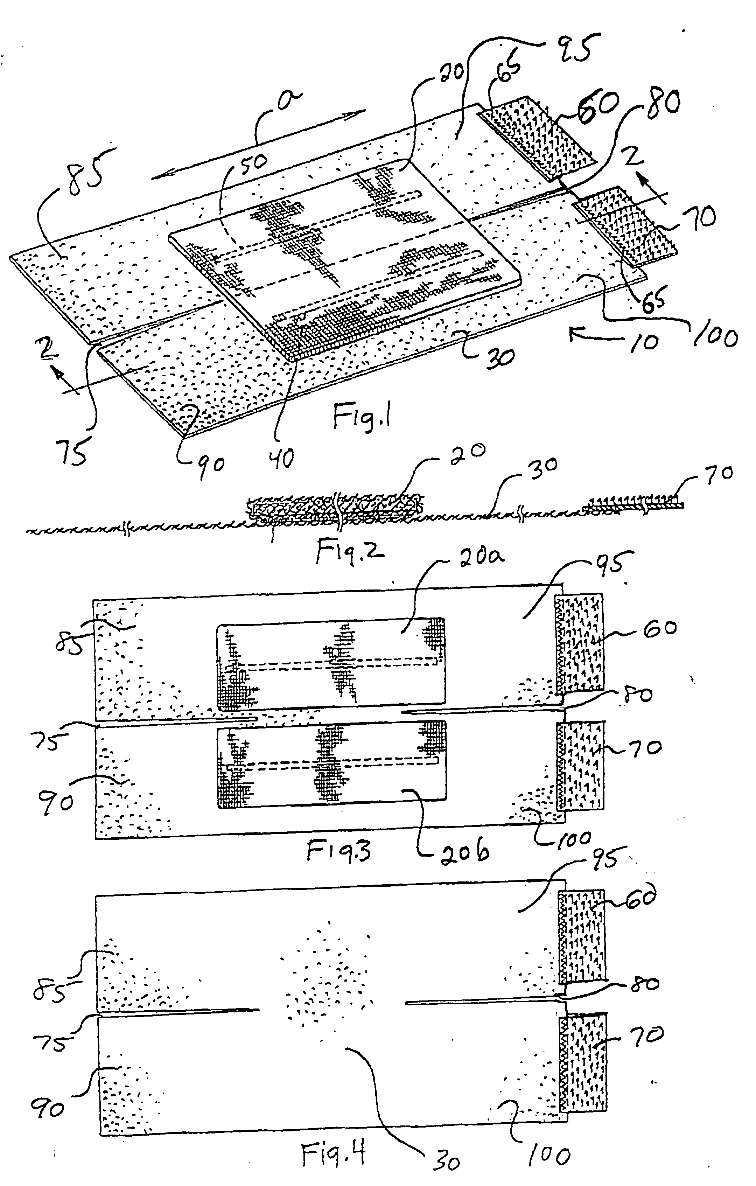

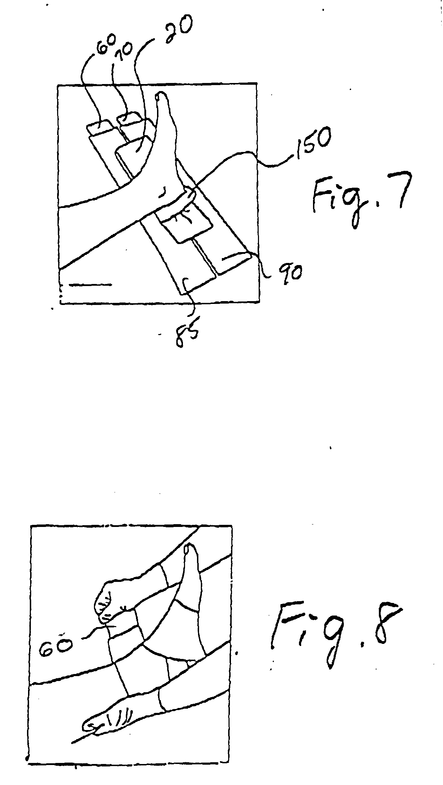

Figs. 1, 2 and 5-8 show a wound dressing holder 10 according to one embodiment of the present invention. The wound dressing holder is used to hold a primary wound dressing in place (150 of Fig. 7), or, alternatively, can also be used to secure a secondary wound dressing 20 in place, the secondary wound dressing being provided for absorbing secretion from the primary wound dressing. The secondary wound dressing 20 also provides padding support to the sensitive wound area. Additionally, the wound dressing holder can be sterilized, in which case the dressing 20 can be used as a primary wound dressing.

The wound dressing holder 10 includes stretchable material 30 having an absorbent material 20 that serves as the secondary wound dressing attached thereto via adhesive strips 40 and 50. As shown in Fig. 1, and an alternative embodiment shown in Fig. 3, a single absorbent pad 20 may be used (Fig. 1) or two pads 20a and 20b can be used as shown in Fig. 3. The wound dressing holder also includes hook fasteners 60 and 70 attached thereto via stitching 65.

To facilitate attachment to a limb or other body part, the material 30 is stretchable in the lengthwise direction shown by arrow A. The stretchability of the material assists the holder 10 in securely holding the wound dressing in place on the patients body.

The entire surface of the material 30 serves as the loop material to which hook fasteners 60 and 70 can be attached to. Thus, the hook fasteners 60 and 70 can be attached anywhere along the outer surface of material 30, enabling the holder to be secured in many different orientations and sizes, thereby being easy to attach to different areas on a patients body. The fasteners 60 and 70 are shown as being sewn to material 30, however, they can also be fused, or attached by any other appropriate means to the stretchable material 30. Furthermore, the fasteners are of a length less that the width of each leg to reduce the likelihood the fasteners contact the patient's skin. The stretchable material can be, for example, Kimberly Clark SB stretch material, however, other appropriate stretchable material can be used.

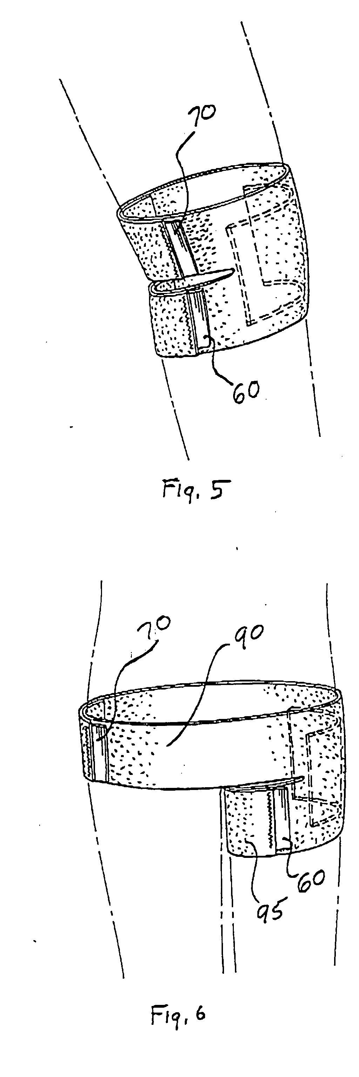

The holder also includes transverse slits 75 and 80 which create legs 85, 90, 95, and 100 in the wound dressing holder. To attach the wound dressing holder about the limb of the patient or other body part, hook fasteners 60 and 70 attached to legs 95 and 100, respectively, are attached to loops on the surface of the stretchable material (for example underneath legs 85 or 90; see Figs. 5-8).

The use of slit 75 and 80 which create legs 85, 90, 95, and 100 further enables the wound dressing holder to be attached in otherwise awkward positions on the body. For example, as seen in Fig. 6, each pair of legs 85 and 95 and 90 and 100 are independently adjustable to attach to awkward positions on the body. Figs. 7 and 8 show other applications in which the legs enable easy attachment to awkward areas. The wound dressing holder is also easily adjustable or removable using hook fasteners 60 and 70.

Absorbent padding 20 is removably attachable to the stretchable material 30, via adhesive strips 40 and 50. The absorbent padding material can be used as a secondary dressing to absorb secretions from a primary wound dressing (150 of Fig. 7), as well as provide padding in the sensitive wound area.

Fig. 3 shows an alternative embodiment in which two absorbent pads 20a and 20b are used. Two pads can be used, for example, where a large strip of stretchable material is used and a standard size absorbent pad 20a is used. Additionally, two pads in some circumstances offers greater flexibility since, due to the stretchability of the material 30, the two pads can be oriented in different directions if the legs 85, 90, 95 and 100 are stretched in slightly different directions. One type of absorbent pad that may be used is, for example, 4.25 x 14.5 pads provided by Principal Business Enterprises, Inc. of Dunbridge, Ohio.

The combined use of easily attachable stretchable material 30 with hook and loop fasteners 60 and 70, and the removable padding material 20 makes changing or adjusting a primary or secondary wound dressing simple and quick. As shown in Fig. 4 (another alternative embodiment), the wound dressing holder can also be used without absorbent pads to hold a primary wound dressing in place on the patient. Alternatively, the wound dressing holder shown in Figs. I and 3 can also be cut completely in half down slits 75 and 80 to form two separate smaller wound dressing holders. In such a case, the absorbent material 20 can be scored, marked or perforated down the middle to avoid spillage of the absorbent material.

The wound dressing holder is manufactured from a single rectangular piece of stretchable material. After hook fasteners are attached to the rectangular piece, the stretchable material can be cut in any number of sizes and shapes according to the part of the body the holder is to be attached. (Or, the stretchable material is first cut to a desired size and then the fasteners are attached.) For example, a 12 x 21 rectangular piece of stretchable material can be used with two 4 1/4 x 4 1/2 absorbent pads in the manner shown in Fig. 3. Although the invention is not limited to a particular size wound dressing holder, examples of smaller sizes are 7 1/2 x 21 and 6 x 16.

Having thus described certain embodiments of the present invention, various alterations, modifications, and improvements will readily occur to those skilled in the art. Such alterations, modifications, and improvements are intended to be within the spirit and scope of the invention. Accordingly, the foregoing description is by way of example only, and not intended to be limiting.

## Claims

1. A wound dressing holder comprising:
a single piece of stretchable material, the piece including a first slit that creates first and second legs and a second slit that creates third and fourth legs; and
a first fastener attached to the first leg and a second fastener attached to the second leg, the first and second fasteners to be secured to a surface of the stretchable material to hold a wound dressing in place.

2. The wound dressing holder of claim 1, wherein the first and second fasteners can be attached anywhere along a first side of the stretchable material.

3. The wound dressing holder of claim 2, wherein the first and second fasteners are hook fasteners and the first side of the stretchable material is a loop fastener.

4. The wound dressing holder of claim 1, wherein the single piece of stretchable material is rectangular.

5. The wound dressing holder of claim 4, wherein the first slit is on a side of the single piece of stretchable material the opposite a side of the piece the second slit is on.

6. The wound dressing holder of claim 5, wherein when the wound dressing holder is attached, the fastener on the first leg is attached to the third leg and the fastener on the second leg is attached to the fourth leg.

7. The wound dressing holder of claim 1, further comprising an absorbent pad attached to the stretchable material.

8. The wound dressing holder of claim 7, wherein the absorbent pad acts as a secondary wound dressing to be placed over a primary wound dressing held in place by the wound dressing holder.

9. The wound dressing holder of claim 7, wherein the absorbent pad is adhered to the stretchable material.

10. The wound dressing holder of claim 1, further comprising first and second absorbent pads attached to the stretchable material.

11. The wound dressing holder of claim 10, wherein the first absorbent pad is located on the first and third legs and the second absorbent pad is located on the second and fourth legs.

12. The wound dressing holder of claim 11, wherein when the wound dressing holder is attached, the fastener on the first leg is attached to the third leg and the fastener on the second leg is attached to the fourth leg.

13. The wound dressing holder of claim 3, wherein the single piece of stretchable material is rectangular.

14. The wound dressing holder of claim 13, wherein the first slit is on a side of the single piece of stretchable material the opposite the second slit.

15. The wound dressing holder of claim 14, further comprising an absorbent pad attached to the stretchable material.

16. The wound dressing holder of claim 15, wherein the absorbent pad acts as a secondary wound dressing to be placed over a primary wound dressing held in place by the wound dressing holder.

17. The wound dressing holder of claim 16, wherein the absorbent pad is adhered to the stretchable material.

18. The wound dressing holder of claim 17, wherein when the wound dressing holder is attached, the fastener on the first leg is attached to the third leg and the fastener on the second leg is attached to the fourth leg.

19. The wound dressing holder of claim 17, further comprising a second absorbent pads attached to the stretchable material.

20. The wound dressing holder of claim 19, wherein the absorbent pad is located on the first and third legs and the second absorbent pad is located on the second and fourth legs.

21. The wound dressing holder of claim 20, wherein when the wound dressing holder is attached, the fastener on the first leg is attached to the third leg and the fastener on the second leg is attached to the fourth leg.
